# EUROPEAN PATENT SPECIFICATION

(11) **EP 1 791 322 B1**
(45) Date of publication and mention of the grant of the patent: **10.12.2008**
(21) Application number: 06775608.0
(22) Date of filing: 06.09.2006
(51) Int. Cl.: H04L 29/08

(54) **A METHOD AND SYSTEM FOR AUTOMATICALLY DISTRIBUTING THE SERVICE TO THE PPP ACCESS TERMINAL**
VERFAHREN UND SYSTEM ZUR AUTOMATISCHEN VERTEILUNG DER DIENSTE AN DAS PPP-ZUGRIFFSENDGERÄT
PROCEDE ET SYSTEME DE DISTRIBUTION AUTOMATIQUE D'UN SERVICE AU TERMINAL D'ACCES PPP

(30) Priority: 09.09.2005 CN 200510099307
(43) Date of publication of application: 30.05.2007
(73) Proprietor: Huawei Technologies Co., Ltd., Longgang District Shenzhen Guangdong 518129 (CN)
(72) Inventor: LI, Hongguang, Guangdong 518129 (CN)
(74) Representative: Epping, Wilhelm
(86) International application number: PCT/CN2006/002294
(87) International publication number: WO 2007/028330

(56) References cited:
- EP-A2- 0 935 381
- WO-A-03/096722
- CN-A- 1 219 053
- CN-A- 1 302 023

## Description

### FIELD OF THE INVENTION

This invention relates to the network communication technology field, in particular, relates to a method and system for implementing Automated Service Provisioning on a PPP (Point-to-Point Protocol) Access Terminal.

### BACKGROUND OF THE INVENTION

With the development of broadband IP networking, we have seen the emergence of more and more value-added services, as well as a greater variety of CPE (Customer Premise Equipment) terminals which serve as specific service carriers. These aforementioned terminals which serve as premise equipment located on the customer's side can be viewed as an extension of the telecommunication access network. Therefore, it is very important for telecommunication operators to effectively manage these terminals in order to achieve their value-added and operational goals.

The terminal is characterized by their large numbers, vast distribution area, and multiple uplink interfaces, and other features. During the overall operation and maintenance process performed by the operators, door-to-door service for the installation of the terminal occupies a relatively large percentage of the production costs. Therefore, achieving the automatic deployment of services targeted at access terminals has become an area of major concern to operators. For this reason, a DHCP (Dynamic Host Configuration Protocol)-based automated provisioning process is currently provided to obtain Network Management/Auto-Configuration Server addresses. After obtaining Network Management/Auto-Configuration Server addresses, the terminal can then obtain terminal software and terminal configuration files and other information from the Network Management/Auto-Configuration Server based on the aforementioned addresses, which is required for the terminal to launch a service.

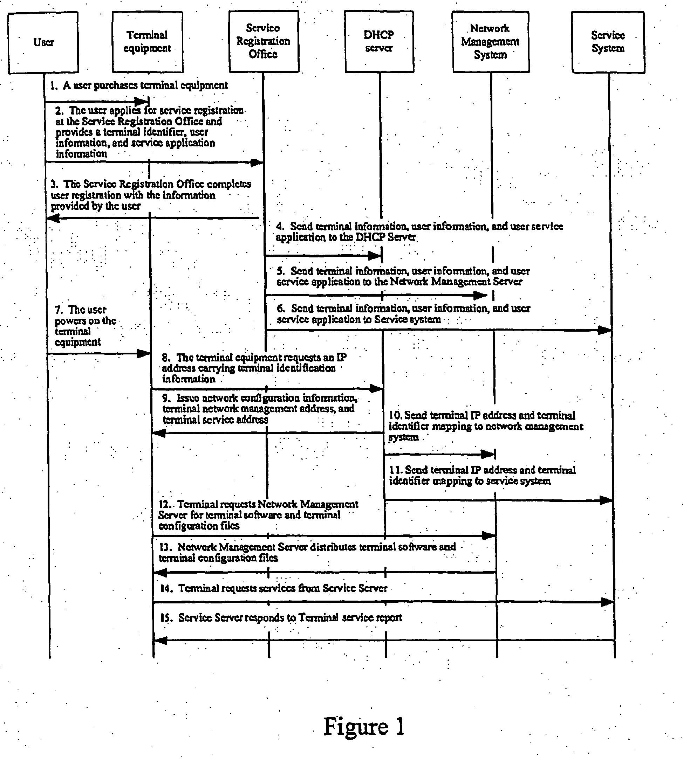

The corresponding automated provisioning process flow is shown in FIG. 1 below, including:
Step 11 to Step 13: A user purchases terminal equipment and applies for services at a Service Registration Office, where they need to provide a terminal identifier, user information, and service application information. The Service Registration Office completes user registration according to the information provided by the user;
Step 14 to Step 16: After completing the registration, the Service Registration Office dispatches the terminal information, user information, and user service application information to the DHCP Server, the network management system, and the service system;
Step 17: The user powers on the terminal equipment;
Step 18: The terminal equipment carrying the terminal identification information requests an IP address from the DHCP Server;
Step 19: The DHCP Server sends network configuration information, terminal network management address, and terminal service address to the terminal equipment;
Step 110 and 111: The DHCP Server sends the terminal IP address and terminal identification mapping association to the network management system and service system, respectively.
Step 112: The terminal equipment requests terminal software and terminal configuration files from Network Management Server based on the acquired network address;
Step 113: The Network Management Server distributes the corresponding terminal software and terminal configuration files to the terminal equipment;
Step 114: The terminal requests services from the Service Server of the service system;
Step 115: The Service Server responds to the terminal's service request. Thus, the terminal is capable of communicating with the Service Server and launching the corresponding services.

In Figure 1, the core is the terminal acquiring key parameters of the Network Management/Auto-Configuration Server URL (Uniform Resource Locator, designated information location) through the DHCP Server. Then, the terminal can automatically exchange with the Network Management/Auto-Configuration Server to obtain all the parameters necessary to launch services. The aforementioned parameters include terminal software and terminal configuration files.

In the process shown in Figure 1, it requires the use of a DHCP Server to distribute IP addresses to the terminal. Therefore, it requires the DHCP Server to verify the validity of the terminal.

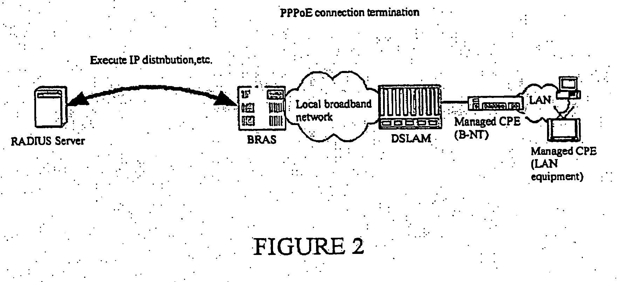

Moreover, the current common broadband configuration is shown in FIG. 2, including the managed CPE (acting as a CPE of the B-NT (Broadband Network Terminal) and a CPE of the LAN (Local Area Network, respectively)), and network devices such as a DSLAM (Digital Subscriber Line Access Multiplexer, a Broadband Access Multiplexer), BRAS (Broadband Remote Access Server), and RADIUS (Remote Authentication Dial-In User Service, Authentication) Server. It is clear that operators often do not deploy a dedicated DHCP Server to distribute IP addresses to the terminals. This leads to the PPP Access Terminal's inability to access the Network Management/Auto-Configuration Server through the DHCP Server. It also is not capable of implementing Automated Service Provisioning process in the network.

WO 03/096722 discloses a method for providing provisioning parameters to a mobile device in a wireless communication system. A short messaging service message is used to send bootstrap data sufficient to establish communication between an Internet Protocol-based server and a mobile device. After authenticated by an AAA server, the mobile device then has its IP address and further establishes communication with the Internet Protocol-based server the and receives the provisioning parameters from the Internet Protocol-based server.

Therefore, at present, there is no DHCP Server that distributes IP addresses deployed in the network, or the deployed DHCP Server does not have a terminal validity authentication function, which is unable to implement Automated Service Provisioning process in the network.

### BRIEF SUMMARY OF THE INVENTION

The embodiment of the present invention provides a method and system for implementing Automated Service Provisioning on a PPP Access Terminal. The use of a PPP Access Terminal can automatically achieve service provisioning without relying on a DHCP Server. It thereby effectively avoids the possibility of the telecommunication operator making major modifications to the network.

The embodiment of the present invention provides a method for implementing Automated Service Provisioning on a PPP Access Terminal, including:
determining by a point-to-point protocol (PPP) access terminal address information of a network management/auto-configuration server; acquiring automatically by the PPP access terminal configuration information needed for launching a service, from the network management/auto-configuration server based on the address information; the PPP access terminal launching the service using the configuration information,
characterized in that:
the process of said PPP access terminal determining the address information of the network management/auto-configuration server includes: negotiating network layer parameters including
address information of a network management/auto-configuration server through IPCP protocol between the PPP access terminal and a PPP server after establishment of the communication link between the PPP access terminal and the PPP server.

The detailed process of the PPP server sending the address information of the Network Management/Auto-Configuration Server with the network layer parameters includes according to an embodiment:
after the PPP Access Terminal is powered on, a PPP access request is initiated;
the PPP Access Terminal and the PPP server perform link layer parameters negotiation and establish a communication link;
the PPP Access Terminal and the PPP server perform network layer parameters negotiation and obtain an IP address and the address information of the Network Management/Auto-Configuration Server.

According to an embodiment, the process of obtaining the IP address and the address information of the Network Management/Auto-Configuration Server includes:
the PPP server sends the address information of the Network Management/Auto-Configuration Server carried by the IP Control Protocol(IPCP)-based message to the PPP Access Terminal.

In an embodiment of the invention, the process of the PPP Access Terminal initiating a PPP access request after it is powered on also includes:
the PPP server determines the address of the Network Management/Auto-Configuration Server based on local configuration information.
   or,
the PPP Server obtains the address of the Network Management/Auto-Configuration Server from an entity allocated with the address information of the Network Management/Auto-Configuration Server.

According to an embodiment, the PPP server includes:
a Broadband Access Server (BRAS) or an Edge Router (ER).

The process of acquiring configuration information required for launching services includes according to an embodiment:
the PPP Access Terminal requests for terminal software and terminal configuration files in accordance with the verified address information of the Network Management/Auto-Configuration Server;
the PPP Access Terminal obtains and runs the corresponding terminal software and terminal configuration files.

According to an embodiment, the process of the PPP Access Terminal using the configuration information to launch services includes:
the PPP Access Terminal having run the corresponding terminal software and configuration files requests services from the service system, and the service system responds to the service request of the PPP Access Terminal.

An embodiment of the present invention also provides a system for PPP Access Terminal automated provisioning, including a PPP Access Terminal, a PPP Server and a Network Management/Auto-Configuration Server. It also includes: an Address Information Distribution Unit and an Address Information Receiving Unit. It also includes a Configuration Information Acquisition Unit and a Service Processing Unit, wherein:
the Address Information Distribution Unit, set up in the PPP server, sends the address information of the Network Management/Auto-Configuration Server with the network layer parameters to the PPP Access Terminal, after the PPP Access Terminal network accesses the network;
the Address Information Receiving Unit receives network layer parameters issued by Address Information Distribution Unit through the PPP server. The network layer parameters include the address information of the Network Management/Auto-Configuration Server;
the Configuration Information Acquisition Unit, set up in the PPP Access Terminal, is used to receive the configuration information needed for Automated Service Provisioning from the Network Management/Auto-Configuration Server based on the address information obtained from the Address Information Receiving Unit;
the Service Processing Unit, located at PPP Access Terminal, is used to launch services using the configuration information.

According to an embodiment, the Address Information Distribution Unit is triggered by a PPP access request initiated by the PPP Access Terminal.

According to an embodiment, the Address Information Distribution Unit sends the address information of the Network Management/Auto-Configuration Server carried by the IPCP-based message to the PPP Access Terminal.

The PPP server also includes according to an embodiment:
the Address Information Management Unit, which is used for locally managing at the PPP server the address information of the network management/auto-configuration server.
   or,
the Address Information Acquisition Unit, which is used to obtain the address of the Network Management/Auto-Configuration Server from the entity allocated with the address information of the Network Management/Auto-Configuration Server.

According to an embodiment, the PPP server includes: a Broadband Access Server (BRAS) or an Edge Router (ER).

An embodiment of the present invention also provides a PPP Access Terminal, including:
an Address Information Receiving Unit which is used to receive network layer parameters, which includes address information of the.Network Management/Auto-Configuration Server;
a Configuration Information Acquisition unit, which is used to automatically obtain the configuration information needed for launching a service from the Network Management/Auto-Configuration Server in accordance with the address information of the Network Management/Auto-Configuration Server;
a Service Processing Unit, which is used to launch the service based on the configuration information.

The above technical solution of the embodiments of the present invention shows that the PPP Access Terminal can automatically obtain the address information of the automatic configuration server through the PPP Server in order to acquire configuration information needed for launching services. In addition, it can also obtain the configuration information through an Auto-Configuration Server in PPP Access Terminal. Therefore, these embodiments of the present invention adopt the utilization of a PPP network to achieve Automated Service Provisioning without relying on a DHCP server, thereby avoiding major modification by the network operators and protecting their investment.

### BRIEF DESCRIPTION OF THE DRAWINGS

Figure 1 is a diagrammatic sketch showing the existing technology for achieving Automated Service Provisioning.
Figure 2 is a diagrammatic sketch showing the existing broadband network deployment.
Figure 3 is a diagrammatic sketch showing the detailed processing procedure for implementing automatic acquisition of the address information from the Network Management/Auto-Configuration Server in an embodiment of the present invention.
Figure 4 shows the detailed processing procedure for implementing Automated Service Provisioning provided by an embodiment of the present invention in diagrammatic sketch 1.
Figure 5 shows the detailed processing procedure for implementing Automated Service Provisioning provided by an embodiment of the present invention in diagrammatic sketch 2.
Figure 6 is a diagrammatic sketch showing the structure of the concrete implementation of the system described in an embodiment of the present invention.

### DETAILED DESCRPTION OF THE INVENTION

The embodiment of the present invention aims to resolve dynamic and static Network Management/Auto-Configuration Server address acquisition by terminals under the PPP Access Terminal mode, and automatically acquire terminal software and terminal configuration files based on the aforementioned Network Management/Auto-Configuration Server in order to achieve automated service provisioning.

In a PPP Access method, there are two stages, including LCP (Link Control Protocol) and NCP (Network Control Protocol), wherein:
(1) In the LCP stage, CPE and Server negotiate link layer parameters to establish communication links.
(2) In NCP stage, CPE and Server negotiate network layer parameters. For IP-based applications, the IPCP (IP Control Protocol) for the NCP can be used to configure IP associated parameters for the terminal equipment, therefore, through the expansion of IPCP Protocol, the ACS (Access Control Server) address, such as Network Management/Auto-Configuration Server address, can be transmitted ().

In the embodiment of the present invention, the detailed expansion content is to add IPCP configuration options based on the IPCP protocol. Through the expansion, the added parameters include: the Network Management/Auto-Configuration Server URL (Uniform Resource Locator Address), that is, the Network Management/Auto-Configuration Server address.

In the embodiment of the present invention, after user authentication is passed using the standard PPP IPCP process, the RADIUS Authentication Server (remote authentication dial-in user service) responsible for handling PPP server authentication returns the server IP address, DNS (domain name system) address, and Network Management/Auto-Configuration Server URL to the terminal.

The URL address of the Network Management/Auto-Configuration Server can be deployed in the PPP server, such as BRAS and ER (Edge Router), or can be deployed in other servers, that the PPP server may acquire through certain protocols.

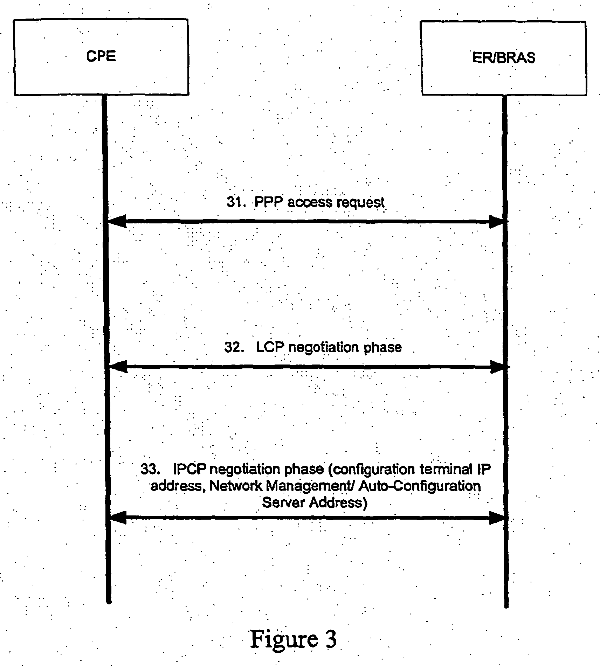

In the embodiment of the present invention, the operation flow automatically acquires the address of the Network Management/Auto-Configuration Server from the PPP Server as shown in figure 3. Specific steps include:
Step 31: Power on the terminal, initiate PPP access request, and establish PPP connection.
Step 32: User terminal and PPP Server (ER/BRAS) negotiate link layer parameters through LCP protocol, and establish communication links.
Step 33: User terminal and PPP Server (ER/BRAS) negotiate IP layer parameters, including IP address and Network Management/Auto-Configuration Server address through IPCP protocol.

To facilitate the understanding of the embodiment of the present invention, the embodiment of this invention will be described with reference to the diagrams.

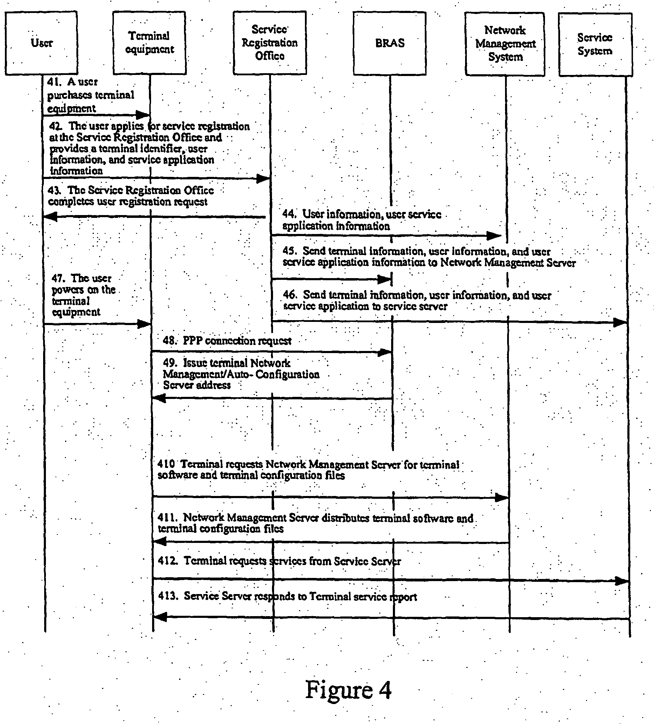

The implementation procedure in the application example 1 of the Automated Service Provisioning flow based on the PPP Uplink mode for acquiring the Network Management/ Auto-configuration Server address is shown in figure 4. The detailed steps may include the following:
Step 41 to 43: A user purchases terminal equipment and registers for services at Service Registration Office. At the same time it is needed to provide a terminal identifier, user information, and user service application information. The Service Registration Office processes user registration based on the information provided by the user.
Step 44 to Step 46: After completing the user registration, the Service Registration Office sends user information and user service application information to the BRAS (Broadband Remote Access Server), and sends user terminal information, user information, and user service application information to the network management system and service system.
Step 47: Power on the user terminal equipment.
Step 48: After the terminal equipment is powered on, it launches a PPP connection request to the BRAS, requesting establishing a PPP connection with the BRAS.
Step 49: BRAS issues the address of the Network Management/Auto-Configuration Server to the terminal equipment.
Step 410: The terminal equipment requests terminal software and terminal configuration files, according to the obtained address of the network management, from the network management server of network management system.
Step 411: Network Management Server distributes the corresponding terminal software and terminal configuration files to the terminal equipment.
Step 412: The terminal equipment requests the Service Server of the service system for services.
Step 413: The Service Server responds to the request of the terminal equipment. Thus, the terminal is able to communicate with the service system and perform related services.

The technical solution provided by the embodiment of the present invention shown in Figure 4 is a fully automated process. Taking into consideration the realities of the network environment, this solution can come up with a compromise, that is, a manual configuration of the Network Management/Auto-Configuration Server address is implemented on the terminal equipment, and then implementing the Automated Service Provisioning process based on the configured Network Management/Auto-Configuration Server address.

In this solution, for terminal equipment with display interface or terminal equipment installed with PC equipment etc, a manually deployed Network Management/Auto-Configuration Server address can be provided through the end-user interface provided by the terminal equipment or by connecting the terminal equipment to the PC equipment. It only needs the configuration of the Network Management/Auto-Configuration Server address and network access authentication parameters, such as PPPoE (based on point-to-point Ethernet-based protocol) user name and password, and thus Automated Service Provisioning can be achieved.

This implementation solution does not need expansion of the PPP protocol. In the meantime, there is also no change to the BRAS equipment in the existing network.

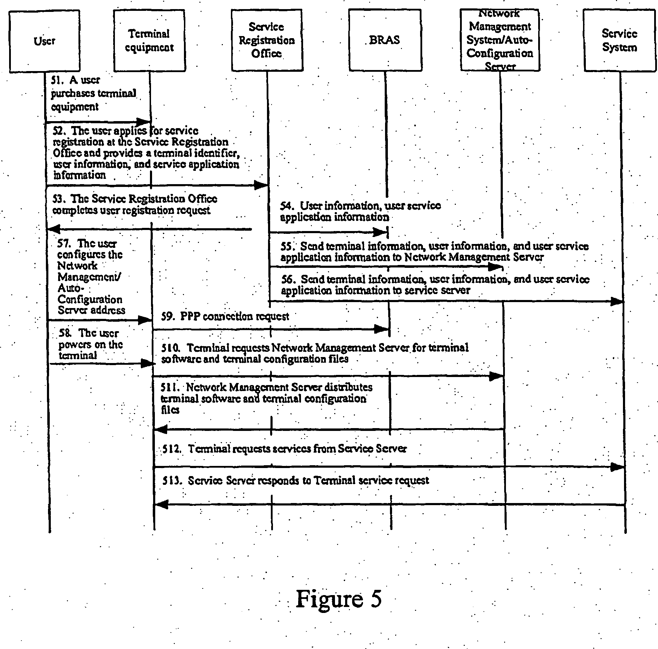

This concrete application example provides a complete Automated Service Provisioning processing flow as shown in figure 5.

The detailed steps include the following:
Step 51 to 53: A user purchases terminal equipment and applies for service registration at the Service Registration Office. In the meantime, it is needed to provide the Service Registration Office with the terminal identifier, user information, and user service application information. The Service Registration Office processes the registration according to the information provided by the user.
Step 54 to Step 56: After the Service Registration Office completes service registration, it distributes the user information and user service application information to the BRAS (Broadband Remote Access Server), and distributes the terminal information, user information, and user service application information to the network management system/auto-configuration server and the service system.
Step 57: The user manually configures the Network Management/Auto-Configuration Server address information.
Step 58: Power on the terminal equipment.
Step 59: After the terminal equipment is powered on, it launches the PPP connection request to the BRAS to facilitate implementation of subsequent processing based on this PPP connection.
Step 510: After establishment of the PPP connection, the terminal equipment requests terminal software and terminal configuration files, according to the obtained address of the network management" from the Network Management Server of the network system.
Step 511: Network Management Server distributes corresponding terminal software and terminal configuration files to the terminal equipment.
Step 512: The terminal equipment requests service from the Service Server of the service system.
Step 513: Service Server responds to the terminal service request. Thus, the terminal equipment is able to communicate with the service system, and launch the associated services.

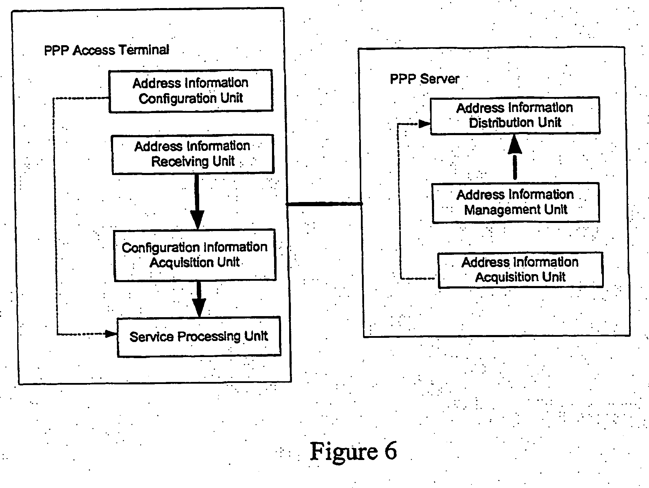

The embodiment of the present invention also provides a system for PPP Access Terminal to realize an Automated Service Provisioning, which includes the PPP Access Terminal, the PPP Server, and the Network Management/Auto-Configuration Server (not shown in the drawing). The detailed realization structure is shown in Figure 6, which includes the following two implementation solutions

### Implementation Solution I:

As shown in Figure 6, the described system includes an Address Information Distribution Unit, an Address Information Receiving Unit, a Configuration Information Acquisition Unit, and a Service Processing Unit, wherein:
(1) The Address Information Distribution Unit, set up in the PPP server, which is used for sending the Network Management/Auto-Configuration Server address information with the network layer parameters to the PPP Access Terminal, after the PPP Access Terminal accesses the network. Specifically, in the LCP stage, the CPE and Server negotiate link layer parameters to establish communication links. In the following NCP stage, the CPE and Server negotiate network layer parameters. During the negotiation of network layer parameters, the PPP Server distributes the aforementioned address information of the Network Management/Auto-Configuration Server to the PPP Access Terminal.
   The aforementioned Address Information Distribution Unit is activated by a PPP access request sent by a PPP Access Terminal. In other words, the PPP Server receives the PPP Access Terminal request, triggers the aforementioned Address Information Distribution Unit and sends the address information of the Network Management/Auto-Configuration Server to the PPP Access Terminal.
   The aforementioned Address Information Distribution Unit sends the address information of the Network Management/Auto-Configuration Server carried by the IPCP-based message to the PPP Access Terminal.
(2) The Address Information Receiving Unit, set up in PPP Access Terminal, is used to receive network layer parameters issued by the Address Information Distribution Unit through the PPP server. The aforementioned network layer parameters include the address information of the Network Management/Auto-Configuration Server so that the PPP Access Terminal will successfully obtain the address information of the corresponding Network Management/Auto-Configuration Server.
(3) The Configuration Information Acquisition Unit
   The Configuration Information Acquisition Unit, set up in PPP Access Terminal, is used to automatically obtain the configuration information needed to launch services from Network Management/Auto-Configuration Server in accordance with the address information of the Address Information Receiving Unit, that is, when the PPP Access Terminal obtains Network Management/Auto-Configuration Server address information, it automatically launches a process to the Network Management/Auto-Configuration Server for obtaining configuration information, so that the PPP Access Terminal successfully acquire the configuration information needed for launching services.
(4) The Service Processing Unit, installed in the PPP Access Terminal, is used to launch services based on the aforementioned configuration information.
   During the implementation of Solution I, the PPP Server needs to send the address information of the aforementioned Network Management/Auto-Configuration Server to the PPP Access Terminal. Therefore, the PPP Access Terminal first needs to have the corresponding address information of Network Management/Auto-Configuration Server. The aforementioned PPP Server also includes:
   The Address Information Management Unit, which is used for managing, locally at the PPP server, the address information of the Network Management/Auto-Configuration Server. For example, the address information of the corresponding Network Management/Auto-Configuration Server is configured and stored directly in the PPP Server and managed by the Address Information Management Unit.
      Or,
   The Address Information Acquisition Unit, which is used to obtain the aforementioned address information of the Network Management/Auto-Configuration Server from the deployed entity configured with address information of the Network Management/Auto-Configuration Server. The details are specified as follows: it performs a process for obtaining the address information when it is needed to send to the PPP Access Terminal aforementioned address information of the Network Management/Auto-Configuration Server. Or it can obtain the address information of the Network Management/Auto-Configuration Server during the other processing periods.

Based on the above Solution I, the corresponding PPP Access Terminal implementation structure may include:
An Address Information Receiving Unit, being used to receive network layer parameters issued by the PPP server. The aforementioned network layer parameters include the address information of the Network Management/Auto-Configuration Server.

A Configuration Information Acquisition Unit, being used to automatically receive the configuration information needed to launch services from the Network Management/Auto-Configuration Server according to the address information obtained from the Address Information Receiving Unit.

A Service Processing Unit, being used to launch services by using the aforementioned configuration information.

### Implementation Solution II

As shown in figure 6, the described system includes an Address Information Configuration Unit, a Configuration Information Acquisition Unit, and a Service Processing Unit.

The Address Information Configuration Unit, set up in the PPP Access Terminal, is used to obtain the configured input address information of the Network Management/Auto-Configuration Server. For example, it is possible to manually input the configuration information through the configuration interface provided.

The Configuration Information Acquisition Unit, set up in PPP Access Terminal, is used to automatically obtain configuration information needed for launching services from Network Management/Auto-Configuration Server in accordance with the address information configured by the Address Information Configuration Unit; that is, if the PPP Access Terminal learns the address information of the Network Management/Auto-Configuration Server, it may automatically initiate a process procedure for obtaining the configuration information to the Network Management/Auto-Configuration Server, so that the PPP Access Terminal successfully acquires the configuration information needed for launching services.

The Service Processing Unit, set up in the PPP Access Terminal, is used to launch services based on the aforementioned configuration information.

The aforementioned PPP Server in the embodiment of the present invention may be: BRAS or ER.

Based on the above Solution II, the corresponding structure of PPP Access Terminal in detailed implementation includes:
An Address Information Configuration Unit, being used to obtain the configured input address information of the Network Management/Auto-Configuration Server.

A Configuration Information Acquisition unit, being used to automatically obtain the configuration information needed to launch services from the Network Management/Auto-Configuration Server, in accordance with the address information of the Address Information Configuration Unit.

A Service Processing Unit, being used to launch services based on the aforementioned configuration information.

In summary, the embodiment of the present invention implements an Automated Service Provisioning process under PPP networking conditions to eliminate relying on the DHCP server and avoiding major network rebuilding to protect the investment of the telecommunication operators.

As stated above, the embodiment of the present invention may be embodied in other specific forms without departing from the scope or essential characteristics of the invention. The embodiments disclosed in this application are to be considered in all respects as illustrative and not restrictive, the scope of the invention being indicated by the appended claims rather than by the foregoing description. Therefore, all changes that come within the meaning and range of equivalency of the claims are intended to be embraced therein.

## Claims

1. A method for implementing automated service provisioning on a point-to-point protocol, PPP, access terminal, comprising:
determining by the PPP access terminal address information of a network management/auto-configuration server;
acquiring automatically by the PPP access terminal configuration information needed for launching a service, from the network management/auto-configuration server based on the address information (410, 411);
the PPP access terminal launching the service using the configuration information,
**characterized in that**: the process of said PPP access terminal determining the address information of the network management/auto-configuration server comprises:
negotiating network layer parameters comprising address information of a network management/auto-configuration server through IPCP protocol between the PPP access terminal and a PPP server after establishment of the communication link between the PPP access terminal and the PPP server.

2. The method for implementing automated service provisioning on the PPP access terminal according to claim 1, wherein the network layer parameters negotiated comprise an IP address and the address information of the network management/auto-configuration server (33).

3. The method for implementing automated service provisioning on the PPP access terminal according to claim 2, further comprising: acquiring an IP address and the address information of the network management/auto-configuration server (33); and
the process of performing a network layer parameter negotiation between the PPP access terminal and the PPP server comprises: sending by the PPP server the address information of the network management/auto-configuration server to the PPP access terminal, wherein the address information is carried by an IP control protocol-based IPCP message.

4. The method for implementing automated service provisioning on the PPP access terminal according to claim 1, wherein the process of determining by the PPP access terminal address information of a network management/auto-configuration server comprises:
determining by the PPP server an address of the network management/auto-configuration server according to local configuration information;
or,
acquiring by the PPP server the address of the network management/auto-configuration server from an entity allocated with the address information of the network management/auto-configuration server.

5. The method for implementing automated service provisioning on the PPP access terminal according to claim 1, wherein the PPP server comprises:
a broadband access server, BRAS, or an edge router, ER.

6. The method for implementing automated service provisioning on the PPP access terminal according to any one of claims 1 through 5, wherein the process of acquiring the configuration information needed for launching the service comprises:
requesting by the PPP access terminal a network management system for terminal software and terminal configuration files, according to the verified address information of the network management/auto-configuration server;
acquiring by the PPP access terminal and running the corresponding terminal software and terminal configuration files.

7. The method for implementing automated service provisioning on the PPP access terminal according to claim 6, wherein the process of the PPP access terminal launching the service using the configuration information comprises:
requesting by the PPP access terminal, having run the corresponding terminal software and configuration files, the service system for the service, and the service system responding to a service request of the PPP access terminal.

8. A system for implementing automated service provisioning on a PPP access terminal, comprising a PPP access terminal, a PPP server, and a network management/auto-configuration server, **characterized by** comprising an address information distribution unit and an address information receiving unit; and also comprising a configuration information acquisition unit and a service processing unit, wherein:
the address information distribution unit, configured in the PPP server, is adpated to send address information of the network management/auto-configuration server along with network layer parameters to the PPP access terminal, after the PPP access terminal accessing the network;
the address information receiving unit is adpated to receive the network layer parameters sent via the address information distribution unit by the PPP server, the network layer parameters comprising address information of the network management/auto-configuration server;
the configuration information acquisition unit, configured in the PPP access terminal, is adpated to automatically acquire configuration information needed for launching a service from the network management/auto-configuration server, based on the address information received by the address information receiving unit;
the service processing unit, configured in the PPP access terminal, is adpated to utilize the configuration information for launching the service.

9. The system for implementing automated service provisioning on a PPP access terminal according to claim 8, wherein the address information distribution unit is triggered by a PPP access request initiated by the PPP access terminal.

10. The system for implementing automated service provisioning on a PPP access terminal according to claim 8, wherein the address information distribution unit sends the address information of the network management/auto-configuration server, carried by IP control protocol-based IPCP message, to the PPP access terminal.

11. The system for implementing automated service provisioning on a PPP access terminal according to claim 8, 9 or 10, wherein the PPP server also comprises:
an address information management unit adpated for locally managing at the PPP server the address information of the network management/auto-configuration server;
or,
an address information acquisition unit adpated toacquire an address of the network management/auto-configuration server from an entity allocated with the address information of the network management/auto-configuration server.

12. The system for implementing automated service provisioning on a PPP access terminal according to claim 8, 9 or 10, wherein the PPP server comprises a broadband access server, BRAS, or an edge router, ER.

13. A PPP access terminal, **characterized by** comprising:
an address information receiving unit adapted to receive network layer parameters sent from a PPP server, wherein said network layer parameters comprises address information of a network management/auto-configuration server;
a configuration information acquisition unit adpated to automatically acquire configuration information needed for launching a service from the network management/auto-configuration server, according to the address information acquired from the address information receiving unit;
a service processing unit adpated to launch the service using the configuration information.

## Patentansprüche

1. Verfahren zur Implementation einer automatisierten Dienstbereitstellung an einem Punkt-zu-Punkt-Protokoll-(PPP)-Zugangsendgerät, umfassend:
Durch das PPP-Zugangsendgerät Bestimmen von Adressinformation eines Netzwerkmanagement-/Autokonfigurations-Servers;
Durch das PPP-Zugangsendgerät automatisches Erfassen von Konfigurationsinformation, die zum Starten eines Dienstes benötigt wird, vom Netzwerkmanagement-/Autokonfigurations-Server auf der Basis der Adressinformation (410, 411);
Starten des Dienstes durch das PPP-Zugangsendgerät unter Verwendung der Konfigurationsinformation,
**dadurch gekennzeichnet, dass** der Prozess des Bestimmens der Adressinformation des Netzwerkmanagement-/Autokonfigurations-Servers durch das PPP-Zugangsendgerät folgendes umfasst:
Aushandeln von Netzwerkebenen-Parametern, die Adressinformationen eines Netzwerkmanagement-/Autokonfigurations-Servers umfassen, durch das IPCP-Protokoll zwischen dem PPP-Zugangsendgerät und einem PPP-Server nach dem Aufbauen der Kommunikationsverbindung zwischen dem PPP-Zugangsendgerät und dem PPP-Server.

2. Verfahren zur Implementation einer automatisierten Dienstbereitstellung an dem PPP-Zugangsendgerät gemäß Anspruch 1, wobei die ausgehandelten Netzwerkebenen-Parameter eine IP-Adresse und die Adressinformation des Netzwerkmanagement-/Autokonfigurations-Servers (33) umfassen.

3. Verfahren zur Implementation einer automatisierten Dienstbereitstellung an dem PPP-Zugangsendgerät gemäß Anspruch 2, ferner umfassend: Erfassen einer IP-Adresse und der Adressinformation des Netzwerkmanagement-/Autokonfigurations-Servers (33); und
wobei der Prozess der Ausführung des Aushandelns von Netzwerkebenen-Parametern zwischen dem PPP-Zugangsendgerät und dem PPP-Server folgendes umfasst: Durch den PPP-Server Senden der Adressinformation des Netzwerkmanagement-/Autokonfigurations-Servers zum PPP-Zugangsendgerät, wobei die Adressinformation von einer auf einem IP-Steuerungsprotokoll basierenden IPCP-Nachricht übertragen wird.

4. Verfahren zur Implementation einer automatisierten Dienstbereitstellung an dem PPP-Zugangsendgerät gemäß Anspruch 1, wobei der Prozess der Bestimmung der PPP-Zugangsendgerät-Adressinformation eines Netzwerkmanagement-/Autokonfigurations-Servers folgendes umfasst:
Durch den PPP-Server Bestimmen einer Adresse des Netzwerkmanagement-/Autokonfigurations-Servers entsprechend der lokalen Konfigurationsinformation;
oder
durch den PPP-Server Erfassen der Adresse des Netzwerkmanagement-/Autokonfigurations-Servers von einer Einheit, die der Adressinformation des Netzwerkmanagement-/Autokonfigurations-Servers zugeordnet ist.

5. Verfahren zur Implementation einer automatisierten Dienstbereitstellung an dem PPP-Zugangsendgerät gemäß Anspruch 1, wobei der PPP-Server folgendes umfasst:
einen Breitband-Zugangs-Server, BRAS, oder einen Edge-Router, ER.

6. Verfahren zur Implementation einer automatisierten Dienstbereitstellung an dem PPP-Zugangsendgerät gemäß einem beliebigen der Ansprüche 1 bis 5, wobei der Prozess der Erfassung der Konfigurationsinformation, die zum Starten des Dienstes benötigt wird, folgendes umfasst:
Durch das PPP-Zugangsendgerät Anfrage bei einem Netzwerkmanagementsystem nach Endgeräte-Software und Endgeräte-Konfigurations-Dateien entsprechend der verifizierten Adressinformation des Netzwerkmanagement-/Autokonfigurations-Servers;
durch das PPP-Zugangsendgerät Abrufen und Laufenlassen der entsprechenden Endgeräte-Software und der Endgeräte-Konfigurations-Dateien.

7. Verfahren zur Implementation einer automatisierten Dienstbereitstellung an dem PPP-Zugangsendgerät gemäß Anspruch 6, wobei der Prozess des Startens des Dienstes durch das PPP-Zugangsendgerät unter Verwendung der Konfigurationsinformation folgendes umfasst:
Durch das PPP-Zugangsendgerät, auf dem die entsprechende Endgeräte-Software und die Konfigurationsdateien ausgeführt wurden, Anfrage beim Dienst-System nach dem Dienst, und Antwort des Dienst-Systems auf die Dienst-Anfrage des PPP-Zugangsendgerätes.

8. System zur Implementation einer automatisierten Dienstbereitstellung auf einem PPP-Zugangsendgerät, das ein PPP-Zugangsendgerät, einen PPP-Server und einen Netzwerkmanagement-/Autokonfigurations-Server umfasst, **dadurch gekennzeichnet, dass** es eine Adressinformations-Verteilungs-Einheit und eine Adressinformations-Empfangs-Einheit enthält; und auch eine Konfigurationsinformations-Erfassungs-Einheit und eine Dienst-Verarbeitungs-Einheit enthält, wobei:
die Adressinformations-Verteilungs-Einheit, die im PPP-Server konfiguriert ist, angepasst ist, Adressinformation des Netzwerkmanagement-/Autokonfigurations-Servers zusammen mit Netzwerkebenen-Parametern zum PPP-Zugangsendgerät zu senden, nachdem das PPP-Zugangsendgerät auf das Netzwerk zugegriffen hat;
die Adressinformations-Empfangs-Einheit angepasst ist, die Netzwerkebenen-Parameter zu empfangen, die über die Adressinformations-Verteilungs-Einheit vom PPP-Server gesendet wurden, wobei die Netzwerkebenen-Parameter Adressinformation des Netzwerkmanagement-/Autokonfigurations-Servers enthalten;
die Konfigurationsinformations-Erfassungs-Einheit, die im PPP-Zugangsendgerät konfiguriert ist, angepasst ist, Konfigurationsinformation, die zum Starten eines Dienstes benötigt wird, automatisch vom Netzwerkmanagement-/Autokonfigurations-Servers auf der Basis der von der Adressinformations-Empfangs-Einheit empfangenen Adressinformation zu erfassen;
die Dienst-Verarbeitungs-Einheit, die im PPP-Zugangsendgerät konfiguriert ist, angepasst ist, die Konfigurationsinformation zum Starten des Dienstes zu nutzen.

9. System zur Implementation einer automatisierten Dienstbereitstellung auf einem PPP-Zugangsendgerät gemäß Anspruch 8, wobei die Adressinformations-Verteilungs-Einheit durch eine PPP-Zugriffs-Anforderung, die vom PPP-Zugangsendgerät ausgelöst wird, angesteuert wird.

10. System zur Implementation einer automatisierten Dienstbereitstellung auf einem PPP-Zugangsendgerät gemäß Anspruch 8, wobei die Adressinformations-Verteilungs-Einheit die Adressinformation des Netzwerkmanagement-/Autokonfigurations-Servers, die von einer auf dem IP-Steuerungsprotokoll basierenden IPCP-Nachricht übertragen wird, zum PPP-Zugangsendgerät sendet.

11. System zur Implementation einer automatisierten Dienstbereitstellung auf einem PPP-Zugangsendgerät gemäß Anspruch 8, 9 oder 10, wobei der PPP-Server auch folgendes umfasst:
eine Adressinformations-Management-Einheit, die angepasst ist, die Adressinformation des Netzwerkmanagement-/Autokonfigurations-Servers lokal im PPP-Server zu verwalten;
oder
eine Adressinformations-Erfassungs-Einheit, die angepasst ist, eine Adresse des Netzwerkmanagement-/Autokonfigurations-Servers von einer Einheit zu erfassen, die der Adressinformation des Netzwerkmanagement-/Autokonfigurations-Servers zugeordnet ist.

12. System zur Implementation einer automatisierten Dienstbereitstellung auf einem PPP-Zugangsendgerät gemäß Anspruch 8, 9 oder 10, wobei der PPP-Server einen Breitband-Zugangs-Server, BRAS, oder einen Edge-Router, ER, umfasst.

13. PPP-Zugangsendgerät, **dadurch gekennzeichnet, dass** es umfasst:
eine Adressinformations-Empfangs-Einheit, die angepasst ist, Netzwerkebenen-Parameter zu empfangen, die von einem PPP-Server gesendet wurden, wobei die Netzwerkebenen-Parameter Adressinformation eines Netzwerkmanagement-/Autokonfigurations-Servers enthalten;
eine Konfigurationsinformations-Erfassungs-Einheit, die angepasst ist, Konfigurationsinformation, die zur Einführung eines Dienstes benötigt wird, automatisch vom Netzwerkmanagement-/Autokonfigurations-Server entsprechend der von der Adressinformations-Empfangs-Einheit erfassten Adressinformation zu erfassen;
eine Dienst-Verarbeitungs-Einheit, die angepasst ist, den Dienst unter Verwendung der Konfigurationsinformation zu starten.

## Revendications

1. Procédé de fourniture d'un service automatisé dans un terminal d'accès à protocole point à point PPP, comprenant :
la détermination par le terminal d'accès PPP de l'information d'adresse d'un serveur de gestion et configuration automatique de réseau ;
l'acquisition automatique par le terminal d'accès PPP auprès du serveur de gestion et configuration automatique de réseau d'information de configuration nécessaire pour lancer un service, sur base de l'information d'adresse (410, 411) ;
le lancement du service par le terminal d'accès PPP en utilisant l'information de configuration,
**caractérisé en ce que** : le processus de détermination par ledit terminal d'accès PPP de l'information d'adresse du serveur de gestion et configuration automatique de réseau comprend :
la négociation de paramètres de couche de réseau comportant de l'information d'adresse d'un serveur de gestion et configuration automatique de réseau, via protocole IPCP entre le terminal d'accès PPP et un serveur PPP, après établissement de la connexion de communication entre le terminal d'accès PPP et le serveur PPP.

2. Procédé de fourniture d'un service automatisé dans le terminal d'accès PPP selon la revendication 1, dans lequel les paramètres de couche de réseau négociés comprennent une adresse IP et l'information d'adresse du serveur de gestion et configuration automatique de réseau (33).

3. Procédé de fourniture d'un service automatisé dans le terminal d'accès PPP selon la revendication 2, comprenant en outre : l'acquisition d'une adresse IP et de l'information d'adresse du serveur de gestion et configuration automatique de réseau (33) ; et le processus d'exécution d'une négociation de paramètres de couche de réseau entre le terminal d'accès PPP et le serveur PPP comprenant : l'envoi par le serveur PPP de l'information d'adresse du serveur de gestion et configuration automatique de réseau au terminal d'accès PPP, dans lequel l'information d'adresse est transportée par un message IPCP basé sur le protocole de contrôle IP.

4. Procédé de fourniture d'un service automatisé dans le terminal d'accès PPP selon la revendication 1, dans lequel le processus de détermination par le terminal d'accès PPP de l'information d'adresse d'un serveur de gestion et configuration automatique de réseau comprend :
la détermination par le serveur PPP d'une adresse du serveur de gestion et configuration automatique de réseau selon de l'information de configuration locale ;
ou,
l'acquisition par le serveur PPP de l'adresse du serveur de gestion et configuration automatique de réseau à partir d'une entité allouée avec l'information d'adresse du serveur de gestion et configuration automatique de réseau.

5. Procédé de fourniture d'un service automatisé dans le terminal d'accès PPP selon la revendication 1, dans lequel le serveur PPP comprend :
un serveur d'accès à large bande BRAS ou un routeur de bordure ER.

6. Procédé de fourniture d'un service automatisé dans le terminal d'accès PPP selon l'une quelconque des revendications 1 à 5, dans lequel le procédé d'acquisition de l'information de configuration nécessaire pour lancer le service comprend :
la requête d'un logiciel de terminal et de fichiers de configuration de terminal par le terminal d'accès PPP auprès d'un système de gestion de réseau, en fonction de l'information d'adresse vérifiée du serveur de gestion et configuration automatique de réseau ;
l'acquisition par le terminal d'accès PPP et l'exécution du logiciel de terminal et des fichiers de configuration de terminal correspondants.

7. Procédé de fourniture d'un service automatisé dans le terminal d'accès PPP selon la revendication 6, dans lequel le processus de lancement du service par le terminal d'accès PPP en utilisant l'information de configuration comprend :
la requête par le terminal d'accès PPP du système de service pour le service, après avoir exécuté le logiciel de terminal et les fichiers de configuration correspondants, et la réponse par le système de service à une requête de service du terminal d'accès PPP.

8. Système de fourniture d'un service automatisé dans un terminal d'accès PPP, comprenant un terminal d'accès PPP, un serveur PPP et un serveur de gestion et configuration automatique de réseau, **caractérisé en ce qu'**il comprend une unité de distribution d'information d'adresse et une unité de réception d'information d'adresse ; et **en ce qu'**il comprend également une unité d'acquisition d'information de configuration et une unité de traitement de service, dans lequel :
l'unité de distribution d'information d'adresse, configurée dans le serveur PPP, est conçue pour envoyer de l'information d'adresse du serveur de gestion et configuration automatique de réseau avec des paramètres de couche de réseau au terminal d'accès PPP, après accès au réseau par le terminal d'accès PPP ;
l'unité de réception d'information d'adresse est conçue pour recevoir les paramètres de couche de réseau envoyés par le serveur PPP via l'unité de distribution d'information d'adresse, les paramètres de couche de réseau comprenant de l'information d'adresse du serveur de gestion et configuration automatique de réseau ;
l'unité d'acquisition d'information de configuration, configurée dans le terminal d'accès PPP, est conçue pour acquérir automatiquement de l'information de configuration nécessaire pour lancer un service à partir du serveur de gestion et configuration automatique de réseau, sur base d'information d'adresse reçue par l'unité de réception d'information d'adresse ;
l'unité de traitement de service, configurée dans le terminal d'accès PPP, est conçue pour utiliser l'information de configuration pour lancer le service.

9. Système de fourniture d'un service automatisé dans un terminal d'accès PPP selon la revendication 8, dans lequel l'unité de distribution d'information d'adresse est commandée par une requête d'accès PPP envoyée par le terminal d'accès PPP.

10. Système de fourniture d'un service automatisé dans un terminal d'accès PPP selon la revendication 8, dans lequel l'unité de distribution d'information d'adresse envoie l'information d'adresse du serveur de gestion et configuration automatique de réseau, transportée par un message IPCP basé sur le protocole de contrôle IP, au terminal d'accès PPP.

11. Système de fourniture d'un service automatisé dans un terminal d'accès PPP selon la revendication 8 ou 10, dans lequel le serveur PPP comprend également :
une unité de gestion d'information d'adresse conçue pour gérer localement dans le serveur PPP l'information d'adresse du serveur de gestion et configuration automatique de réseau ;
ou
une unité d'acquisition d'information d'adresse conçue pour acquérir une adresse du serveur de gestion et configuration automatique de réseau provenant d'une entité allouée avec l'information d'adresse du serveur de gestion et configuration automatique de réseau.

12. Système de fourniture d'un service automatisé dans un terminal d'accès PPP selon la revendication 8, 9 ou 10, dans lequel le serveur PPP comprend un serveur d'accès à large bande BRAS ou un routeur de bordure ER.

13. Terminal d'accès PPP **caractérisé en ce qu'**il comprend :
une unité de réception d'information d'adresse conçue pour recevoir des paramètres de couche de réseau envoyés par un serveur PPP, dans lequel lesdits paramètres de couche de réseau comprennent une information d'adresse d'un serveur de gestion et configuration automatique de réseau ;
une unité d'acquisition d'information de configuration conçue pour acquérir automatiquement de l'information de configuration nécessaire pour lancer un service à partir du serveur de gestion et configuration automatique de réseau, en fonction de l'information d'adresse acquise par l'unité de réception d'information d'adresse ;
une unité de traitement de service conçue pour lancer le service en utilisant l'information de configuration.
